# EUROPEAN PATENT SPECIFICATION

(11) **EP 3 232 316 B1**
(45) Date of publication and mention of the grant of the patent: **27.09.2023**
(21) Application number: 17160900.1
(22) Date of filing: 14.03.2017
(51) Int. Cl.: G06F 3/06, G06F 3/0484, G06F 9/44, G06F 21/31

(54) **METHOD AND DEVICE FOR DATA MIGRATION**
VERFAHREN UND VORRICHTUNG ZUR DATENMIGRATION
PROCÉDÉ ET DISPOSITIF DE MIGRATION DE DONNÉES

(30) Priority: 15.04.2016 CN 201610236128
(43) Date of publication of application: 18.10.2017
(73) Proprietor: Beijing Xiaomi Mobile Software Co., Ltd., Beijing 100085 (CN)
(72) Inventor: LV, Zengxiang, Beijing, Beijing 100085 (CN); WANG, Le, Beijing, Beijing 100085 (CN); LI, Nan, Beijing, Beijing 100085 (CN)
(74) Representative: dompatent von Kreisler Selting Werner - Partnerschaft von Patent- und Rechtsanwälten mbB

(56) References cited:
- EP-A2- 2 306 307
- WO-A1-2015/122087
- CN-A- 103 577 761
- CN-A- 103 870 755
- icopilot1: "Dropbox iPhone App Tutorial", You Tube, 12 February 2013 (2013-02-12), page 1, XP054977705, Retrieved from the Internet: URL:https://www.youtube.com/watch?v=Bo-kGS xDMVo [retrieved on 2017-09-07]

## Description

### TECHNICAL FIELD

The present disclosure generally relates to the technical field of terminals, and more particularly to a method and device for data migration.

### BACKGROUND

With the development of science and technology, a terminal, which can carry a multi-user operating system such as Android 5.0, has been achieved. The multi-user operating system allows more than one account to be created on the same terminal, wherein the storage spaces corresponding to different account systems are isolated from each other, and each account system has access rights to data within its own storage space, but does not have access rights to storage spaces of other account systems without authorization, in order to achieve the protection of user privacy. But when an account system needs to manage the data in the storage space corresponding to another account system, data migration is required between the storage spaces corresponding to the two account systems.

Currently, when a user needs to migrate the data from a first space to a second space within a terminal, another storage device as an intermediary is often needed, and a specific method may be as following: the data in a first space, which are to be migrated, is transmitted to an intermediary storage, which in turn transmits the data in the first space, which are to be migrated, from the intermediary storage device to a second space; wherein the first space is a storage space managed by a first account system, and the second space is a storage space managed by a second account system.

The above described data migration method is complicated to operate, and a user can not directly migrate data between different account systems on a same terminal. D1 (Dropbox iPhone App Tutorial) relates to a tool for network file synchronization, i.e. Dropbox iPhone App, that is able to synchronize a file stored locally to a cloud server for access from a different device, and particularly teaches how to set and use various items in the Dropbox iPhonc App.
D4 (CN103870755 A) provides a method and a device for transferring files between multiple users of the same electronic device A user can finish the operation of transferring files in a file list or a folder to a private file space of a specified user by dragging the files or the folder to the icon region of the specified user in a user list.
D5 (CN103870755 A) discloses a method and a device for processing privacy data in mobile equipment. The method comprises the steps that when the mobile equipment is connected to a computer, a first identity logged in on a mobile equipment side and a second identity logged in on a computer side are acquired; whether the first identity and the second identity are associated is judged; if so, an entry of a privacy space is displayed on the mobile equipment side; the privacy space is a disk storage space encrypted by a coded lock; when a request accessing the privacy space via the entry is received, the coded lock is displayed on the mobile equipment side; and when decryption information corresponding to the coded lock is received, data in the privacy space is displayed on the mobile equipment side.

### SUMMARY

In view of the fact in related arts, the present disclosure provides a method and device for data migration. The invention is defined by the claims.

According to a first aspect of embodiments in the present disclosure, a method for data migration is provided. The method includes: triggering a data migration operation in a privacy space having data migration rights; receiving data selected to be migrated; performing, by using a preset interface provided in the privacy space, the migration operation on the data to be migrated.

In a first potential implementation of the first aspect in the present disclosure, the performing, by using the preset interface provided in the privacy space, the migration operation on the data to be migrated includes: migrating the data to be migrated from a normal space to the privacy space via the preset interface, when the data to be migrated is data in the normal space; migrating the data to be migrated from the privacy space to the normal space via the preset interface, when the data to be migrated is data in the privacy space.

The preset interface is a preinstalled system level interface for providing a data channel between the privacy space and the normal space; the performing, by using a preset interface provided in the privacy space, the migration operation on the data to be migrated includes: determining whether a current space is the privacy space, when the preset interface is invoked for migration operation on the data of the privacy space; invoking the preset interface for migration operation on the data of the privacy space, if the current space is the privacy space; denying invoking of the preset interface for migration operation on the data of the privacy space, if the current space is the normal space.

The triggering the data migration operation in the privacy space includes: logging in the privacy space, when it is necessary to carry out data migrate-in or migrate-out operation on the privacy space; triggering a data migration function in the privacy space to display a data migration interface, wherein the data migration interface includes at least a data migrate-out option and a data migrate-in option.

The receiving the data selected to be migrated includes: displaying a first data selection interface, when a trigger operation on the data migrate-out option is detected, the first data selection interface comprises a data list of the privacy space; receiving a selected first data as the data to be migrated, according to a selection operation by a user in a data list of the privacy space; accordingly, the performing, by using the preset interface provided in the privacy space, the migration operation on the data to be migrated includes: migrating the data to be migrated from the privacy space to a normal space via the preset interface.

The receiving the data selected to be migrated includes: displaying a second data selection interface, when a trigger operation on the data migrate-in option is detected, wherein the second data selection interface comprises a data list of a normal space; receiving the selected second data as the data to be migrated, according to a selection operation by the user in the data list of the normal space; accordingly, the performing, by using the preset interface provided in the privacy space, the migration operation on the data to be migrated includes: migrating the data to be migrated from the normal space to the privacy space via the preset interface.

In a sixth potential implementation of the first aspect in the present disclosure, any other space except the privacy space does not have the data migration rights.

In a seventh potential implementation of the first aspect in the present disclosure, prior to the triggering the data migration operation in the privacy space, the method further includes: displaying an unlock interface of the privacy space, when an access request for the privacy space is received; receiving a password inputted by a user on the unlock interface of the privacy space; displaying an interface of the privacy space in the case that the password is consistent with an unlock password of the privacy space.

In a eighth potential implementation of the first aspect in the present disclosure, the data migrate-out option includes migrate-out sub-options for multiple types of data, the data migrate-in option includes migrate-in sub-options for multiple types of data, and different types of data correspond to different storage paths in the privacy space.

According to a second aspect of embodiments in the present disclosure, a device for data migration is provided, wherein the device is a terminal. The device includes: an operation trigger module configured to trigger a data migration operation in a privacy space having data migration rights; a data reception module configured to receive data selected to be migrated; a data migration module configured to perform, by using a preset interface provided in the privacy space, the migration operation on the data to be migrated.

In a first potential implementation of the second aspect in the present disclosure, the data migration module is configured to: migrating the data to be migrated from a normal space to the privacy space via the preset interface, when the data to be migrated is data in the normal space; migrating the data to be migrated from the privacy space to the normal space via the preset interface, when the data to be migrated is data in the privacy space.

The preset interface is a preinstalled system level interface for providing a data channel between the privacy space and the normal space; the data migration module is configured to: determine whether a current space is the privacy space, when the preset interface is invoked for migration operation on the data of the privacy space; invoking the preset interface for migration operation on the data of the privacy space, if the current space is the privacy space; deny invoking of the preset interface for migration operation on the data of the privacy space, if the current space is a normal space.

The operation trigger module is configured to: log in the privacy space, when it is necessary to carry out data migrate-in or migrate-out operation on the privacy space; trigger a data migration function in the privacy space to display a data migration interface, the data migration interface at least includes a data migrate-out option and a data migrate-in option.

The data reception module is configured to: display a first data selection interface, when a trigger operation on the data migrate-out option is detected, the first data selection interface comprises a data list of the privacy space; receive the selected first data as the data to be migrated, according to a selection operation by a user in the data list of the privacy space; accordingly, the data migration module is configured to migrate the data to be migrated from the privacy space to a normal space via the preset interface.

The data reception module is configured to: display a second data selection interface, when a trigger operation on the data migrate-in option is detected, the second data selection interface comprises a data list of the normal space; receive the selected second data as the data to be migrated, according to a selection operation by the user in the data list of the normal space; and accordingly, the data migration module is configured to migrate the data to be migrated from the normal space to the privacy space via the preset interface.

In a sixth potential implementation of the second aspect in the present disclosure, any other space except the privacy space does not have the data migration rights.

In a seventh potential implementation of the first aspect in the present disclosure, the device further includes: a display module configured to display an unlock interface of the privacy space, when an access request for the privacy space is received; a password reception module configured to receive a password inputted by a user on the unlock interface of the privacy space; and the display module is further configured to display the privacy space in the case that the password is consistent with an unlock password for the privacy space.

In a eighth potential implementation of the second aspect in the present disclosure, the data migrate-out option includes migrate-out sub-options for multiple types of data, the data migrate-in option includes migrate-in sub-options for multiple types of data, and different types of data correspond to different storage paths in the privacy space.

The technical solutions provided by the embodiments of the present disclosure may attain at least the following beneficial effects. In the present disclosure, by triggering a data migration operation in a privacy space, and by performing, by using a preset interface provided in the privacy space, the migration operation on the received data to be migrated, data migration between different spaces on a same terminal can be achieved without other storage devices as an intermediary, so that a user can select a storage space for data as needed, which can not only protect the privacy of user data, but also improve the convenience for the user to access data.

It is to be understood that both the forgoing general descriptions and the following detailed descriptions are exemplary and explanatory only, and are not restrictive of the present disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a flow chart showing a method for data migration according to an exemplary embodiment;
Fig. 2A is a flow chart showing a method for data migration according to an exemplary embodiment;
Fig. 2B is a schematic diagram showing a data migration interface according to an exemplary embodiment;
Fig. 3 is a block diagram illustrating a device for data migration according to an exemplary embodiment; and
Fig. 4 is a block diagram illustrating a device 400 for data migration according to an exemplary embodiment.

### DETAILED DESCRIPTION

For the purposes that the present disclosure, technical solutions and advantages will become more apparent, the implementations of the present disclosure will be further described in detail in conjunction with the accompanying drawings.

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they are merely examples of device and methods consistent with aspects related to the invention as recited in the appended claims.

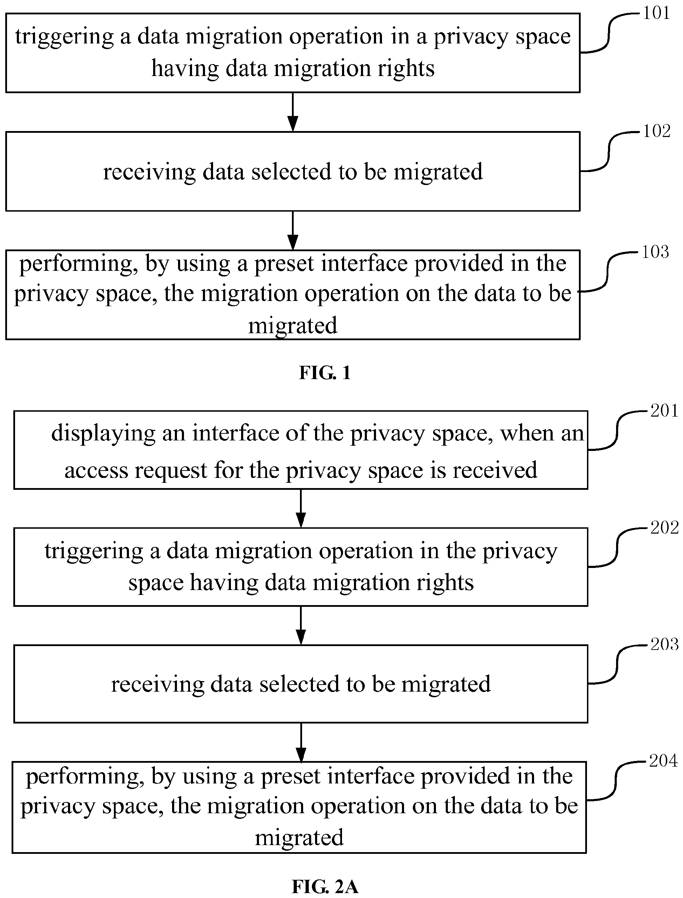

Fig. 1 is a flow chart showing a method for data migration according to an exemplary embodiment. As shown in Fig. 1, the method for data migration, which is used in a terminal, includes the following steps.

In step 101, data migration operation is triggered in a privacy space having data migration rights.

In step 102, data, which is selected to be migrated, are received.

In step 103, by using a preset interface provided in a privacy space, the migration operation on the data to be migrated is performed.

In the method provided by the embodiment of the present disclosure, by triggering a data migration operation in a privacy space, and by performing, by using a preset interface provided in the privacy space, the migration operation on the data to be migrated, data migration between different spaces on a same terminal can be achieved without other storage devices as an intermediary, so that a user can select storage space of data as needed, which can not only protect the privacy of user data, but also improve the convenience for user to access data.

In a first potential implementation in the present disclosure, the performing, by using a preset interface provided in the privacy space, the migration operation on the data to be migrated may include: migrating the data to be migrated from a normal space to the privacy space via the preset interface, when the data to be migrated is data in the normal space; migrating the data to be migrated from the privacy space to the normal space via the preset interface, when the data to be migrated is data in the privacy space.

The preset interface is a preinstalled system level interface for providing a data channel between the privacy space and the normal space; and the performing, by using a preset interface provided in the privacy space, the migration operation on the data to be migrated includes : determining whether a current space is the privacy space, when the preset interface is invoked for migration operation on the data of the privacy space; invoking the preset interface for migration operation on the data of the privacy space, if the current space is the privacy space; denying invoking of the preset interface for migration operation on the data of the privacy space, if the current space is the normal space.

The triggering the data migration operation in the privacy space includes logging in the privacy space, when it is necessary to carry out data migrate-in or migrate-out operation on the privacy space; triggering a data migration function in the privacy space to display a data migration interface, wherein the data migration interface at least includes a data migrate-out option and a data migrate-in option.

The receiving the data, which is selected to be migrated, includes : displaying a first data selection interface, when a trigger operation on the data migrate-out option is detected, the first data selection interface comprises a data list of the privacy space; receiving a selected first data as the data to be migrated, according to a selection operation by a user in the data list of the privacy space; and accordingly, the performing, by using the preset interface provided in the privacy space, the migration operation on the data to be migrated may include: migrating the data to be migrated from the privacy space to a normal space via the preset interface.

The receiving the data, which is selected to be migrated includes : displaying a second data selection interface, when a trigger operation on the data migrate-in option is detected, the second data selection interface comprises a data list of the normal space; receiving the selected second data as the data to be migrated, according to a selection operation by the user in the data list of the normal space; and accordingly, the performing, by using the preset interface provided in the privacy space, the migration operation on the data to be migrated may include: migrating the data to be migrated from the normal space to the privacy space via the preset interface.

In a sixth potential implementation in the present disclosure, any other space except the privacy space does not have the data migration rights.

In a seventh potential implementation in the present disclosure, prior to the triggering the data migration operation in the privacy space, the method may further include: displaying an unlock interface of the privacy space, when an access request for the privacy space is received; receiving a password inputted by a user on the unlock interface of the privacy space; displaying an interface of the privacy space in the case that the password is consistent with an unlock password of the privacy space.

In a eighth potential implementation in the present disclosure, the data migrate-out option includes migrate-out sub-options for multiple types of data, the data migrate-in option includes migrate-in sub-options for multiple types of data, and different types of data correspond to different storage paths in the privacy space.

All of the above optional technical solutions can be combined in any form to form optional embodiments of the present disclosure, which will not be described repeatedly.

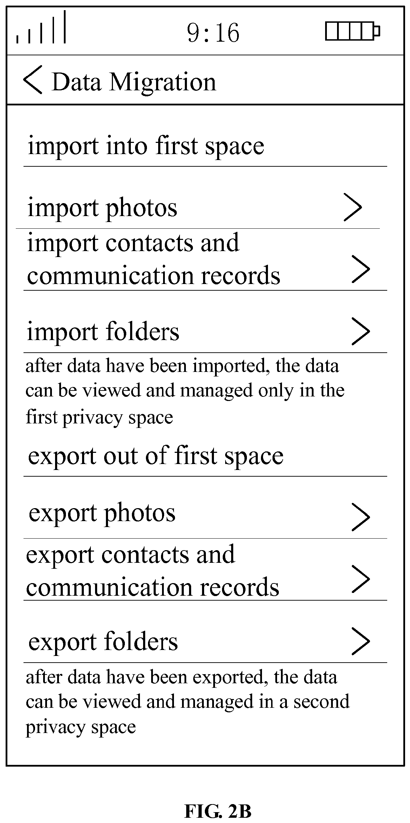

Fig. 2 is a flow chart showing a method for data migration according to an exemplary embodiment. The executive body of the embodiment may be a terminal, which supports a multi-account system. Referring to Fig. 2, the embodiment particularly includes the following steps.

In step 201, an interface of a privacy space is displayed, when an access request for the privacy space is received.

The interface of the privacy space at least includes a specified application icon, which provides an entry of a data migration function. The data migration function is used for data migration between a privacy space and a normal space. Of course, the interface of the privacy space may also include other contents, such as an application icon for system settings. The embodiments of the present disclosure are not particularly limited hereto.

The access request for the privacy space may be triggered by the following ways: the access request for the privacy space is triggered when a trigger operation on a corresponding account name of the privacy space is detected in a space switch interface; or a shortcut icon for accessing the privacy space can also be displayed in any other space interface, and the access request for the privacy space is triggered when a trigger operation on the quick access icon is detected. Of course, other ways can be employed to trigger the access request for the privacy space. The embodiments of the present disclosure are not particularly limited hereto.

Further, the privacy space can be accessed by login with a password. The specific method can be as follows: an unlock interface of the privacy space is displayed, when the access request for the privacy space is received; a password inputted by a user on the unlock interface of the privacy space is received; the privacy space is displayed in the case that the password is consistent with an unlock password of the privacy space. The privacy space must be access by using a password, so security and privacy of a user' data can be further enhanced.

In another embodiment of the present disclosure, the privacy space is used for storing privacy data of a user or data that the user wants to hide, the normal space is used for storing data of lower privacy. Each of the privacy space and the normal space can be a space set by a user, or a default space set by the system. The embodiments of the present disclosure are not limited hereto. It should be noted that the user can view the data in the normal space and cannot view the data in the privacy space, when a current space of a terminal is the normal space; and the user can view both the data in the normal space and in the privacy space, when the current space of a terminal is the privacy space.

The privacy space is used for storing privacy data of a user or data that the user wants to hide and the normal space is used for storing data of lower privacy, so security of privacy data can further improved.

In step 202, a data migration operation in the privacy space is triggered. The privacy space has data migration rights.

The data migration operation is triggered as follows: an option for providing data migration function is displayed in the interface of the privacy space, and the data migration function will be triggered when a data trigger operation on the option is detected. The data trigger operation can be triggered in any of other ways. For example, when the terminal is a terminal having a touch screen, the data migration operation will be triggered if a specified gesture inputted by a user in a terminal interface is detected. The specified gesture may be a three-finger-grabbing gesture, which is a quick way to trigger the data migration operation. Of course, the specified gesture may be any other gesture, and the embodiments of the present disclosure are not particularly limited hereto.

The privacy space should be logged in when it is necessary to carry out data migrate-in or migrate-out operation on the privacy space. Then a data migration function is triggered in the privacy space to display a data migration interface. The data migration interface includes at least a data migrate-out option and a data migrate-in option. The data migrate-out option is used for migrating data in the privacy space to the normal space, and the data migrate-in option is used for migrating data in the normal space to the privacy space. Besides the data migrate-out option and the data migrate-in option, the data migration interface may further include other information, such as guidelines for data migration, etc, The embodiments of the present disclosure are not particularly limited hereto.

The data migrate-out option may include migrate-out sub-options for multiple types of data, and the data migrate-in option may include migrate-in sub-options for multiple types of data. Different types of data correspond to different storage paths in the space. That is, each migrate-out sub-option for a corresponding type of data is used for migration of the corresponding type of data from the privacy space to the normal space; and accordingly, each migrate-in sub-option for a corresponding type of data type is used for migration of the corresponding type of data from the normal space to the privacy space.

The multiple types of data may include photos, contacts and communication records, and may also include a migratable folder, and any other data that can be migrated between two spaces. The embodiments of the present disclosure are not particularly limited hereto. Fig. 2B is a schematic diagram showing a data migration interface according to an exemplary embodiment. In Fig. 2B, "import photos", "import contacts and communication records" and "import folders" are migrate-in sub-options for corresponding types of data respectively, and are used for migration of photos, contacts and communication records and folders in other space from the normal space to the privacy space; and "export photos", "export contacts and communication records" and "export folders" are migrate-out sub-options for corresponding types of data respectively, and are used for migration of photos, contacts and communication records and folders from the privacy space to a normal space.

In addition, in Fig. 2B, the data migration interface can also display a prompt message for prompting the user that: after data have been migrated into the privacy space, the data can be viewed and managed only in the privacy space; after data have been migrated out of the privacy space, the data can be viewed and managed in the space, into which the data has been migrated. Of course, the migration interface may include other information. The embodiments of the present disclosure are not particularly limited hereto.

In another embodiment of the present disclosure, other spaces except the privacy space do not have the data migration rights. That is, when the specified application icon is displayed in the interface of the privacy space, if the current space of the terminal is the privacy space, and a trigger operation on the specified application icon is detected, a data migration interface is displayed to attain migration of data from a normal space into the privacy space or migration of data from the privacy space into the normal space. If the current space of the terminal is the normal space, the specified application icon is not displayed in the interface of the normal space, that is, the user cannot perform in the mormal space a data migration operation between different spaces on the same terminal. With the above method, a data migration operation can only be performed in the privacy space, and thus through migration of the data from the privacy space into the normal space, it is convenient for user to use, manage or access the data; and through migration of data from the normal space into the privacy space, security of the data can be enhanced, and hence privacy of the user's data can be further enhanced.

It should be noted that a terminal may include multiple privacy spaces, and each privacy space may be set by a user for storing different types of data. For example, a first privacy space may be used for storing photos, a second privacy space may be used for storing contacts and communication records. Accordingly, the terminal may also include multiple normal spaces. Regarding the number of the privacy spaces and the normal spaces, the embodiments of the present disclosure are not limited thereto.

By setting multiple privacy spaces for storing different types of data respectively, separate managements of different types of data can be achieved.

In step 203, the data, which is selected to be migrated, is received.

In the case that the data migration interface includes a data migrate-out option and a data migrate-in option, reception of the data which is selected to be migrated can be implemented by the following two methods.

Method 1: a first data selection interface is displayed, when a trigger operation on the data migrate-out option is detected. The first data selection interface comprises a data list of the privacy space. Then, a selected first data is received as the data to be migrated according to a selection operation by the user in the data list of the privacy space.

The data migrate-out option may include migrate-out sub-options for multiple types of data, and in this case, when a trigger operation on a migrate-out sub-option for any type of data is detected, a data list of that type of data in the privacy space is displayed. For example, if the type of data is a photo, then when a trigger operation on the migrate-out sub-option for photos is detected, a list of photos stored in the privacy space will be displayed for to user to select a photo to be migrated. As shown in Fig. 2B, when a trigger operation on the option "export photos" in the figure is detected, a list of the photos in the privacy space will be displayed for the user to select a photo to be migrated out. When a selection operation on any data in the data list of the privacy space is detected, the data are received as the data to be migrated.

By detecting a trigger operation on a migrate-out sub-options of a different type of data and displaying a data list corresponding to that type of data accordingly, the user is able to find out the data to be migrated quickly, and thus convenience of data migration can be enhanced.

Method 2, a second data selection interface is displayed when a trigger operation on the data migrate-in option is detected The second data selection interface comprises a data list of the normal space Then, a selected second data is received as the data to be migrated according to a selection operation by the user in the data list of the normal space.

The data migrate-in option may include migrate-in sub-options for multiple types of data, and in this case, when a trigger operation on a migrate-in sub-option for any type of data is detected, a data list of that type of data in a storage space corresponding to the normal space is displayed. For example, if the type of data is a photo, then when a trigger operation on a migrate-in sub-option for photos is detected, a list of photos stored in the storage space corresponding to the normal space will be displayed for the user to select a photo to be migrated. As shown in Fig. 2B, when a trigger operation on the option "export photos" in the figure is detected, a list of photos in the privacy space will be displayed for the user to select a photo to be migrated into the privacy space.

By detecting a trigger operation on a migrate-in sub-option of a different type of data, and displaying a data list corresponding to that type of data accordingly, the user is able to find out the data to be migrated quickly, and thus convenience of data migration can be enhanced.

In step 204, the migration operation on the data to be migrated is performed by using a preset interface provided in the privacy space.

The preset interface is used for migration of data in a privacy space to a normal space and migration of data in a normal space to a privacy space.

In order to further enhance the security, a preset interface for providing a data channel between the privacy space and the normal space may be a preset system-level interface. The preset interface can only be invoked in the privacy space, but cannot be invoked in the normal space.

The preset interface is a preset system-level interface for providing a data channel between the privacy space and the normal space. A determination as to whether the current space is the privacy space is made when the preset interface is invoked for migration operation on the data of the privacy space. The preset interface is invoked for migration operation on the data of the privacy space, if the current space is the privacy space; and the preset interface will be denied to be invoked for migration operation on the data of the privacy space, if the current space is the normal space. That is, when the current space of the terminal is a privacy space, data migration between different spaces can be achieved by invoking of the preset interface; and when the current space of a terminal is a normal space, the preset interface cannot be invoked, i.e., data migration between different spaces cannot be achieved.

The data to be migrated are migrated from a normal space to the privacy space via the preset interface, when the data to be migrated is the data in the normal space; and the data to be migrated are migrated from the privacy space to the normal space via the preset interface, when the data to be migrated is the data in the privacy space.

Specifically, when a selection operation on any data in the data list of the privacy space is detected, the data to be migrated are migrated from the privacy space to the normal space via the preset interface. It should be noted that, migration of the data to be migrated from the privacy space to the normal space means that the data will be stored in the normal space and deleted from the privacy space.

For migration of data from the privacy space to the normal space, the data in the data list of the privacy space can be migrated by one piece at a time, or by multiple pieces at a time. An "select all" option can be displayed on the top or bottom of the displayed data list, and in this case, when a trigger operation on the "select all" option is detected and confirmation of the migration operation is detected, all of data are migrated from the privacy space to the normal space at the same time. The embodiments of the present disclosure are not particularly limited hereto.

In another embodiment, the current terminal may includes multiple normal spaces in addition to the privacy space. In such a case, during migrate-out process, when the data to be migrated is determined, a target normal space should be determined according to selection by the user among the multiple normal spaces, and then the data will be migrated to the target normal space, and thereby data migration on a terminal having multiple normal spaces can be achieved.

The method for migrating the data to be migrated from the normal space to the privacy space via the preset interface is same as the above method for migrating the data to be migrated from the privacy space to the normal space via the preset interface, and thus will be not repeated here.

In the methods provided by the embodiments of the present disclosure, by triggering a data migration operation in a privacy space and by performing, by using a preset interface provided in the privacy space, the migration operation on the data to be migrated, data migration between different spaces on a same terminal can be achieved without other storage devices as an intermediary, so that a user can select a storage space for data as needed, which can not only protect privacy of the user's data, but also improve convenience for the user to access the data. Moreover, since the privacy space must be accessed by using a password, security and privacy of the user's data can be further enhanced.

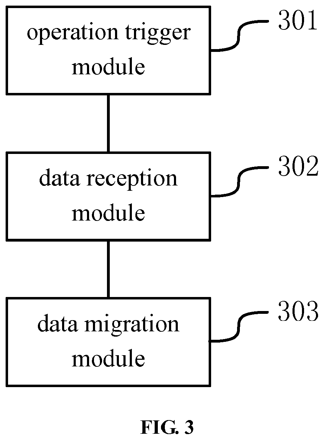

Fig. 3 is a block diagram illustrating a device for data migration according to an exemplary embodiment. Referring to Fig. 3, the device includes an operation trigger module 301, a data reception module 302 and a data migration module 303.

The operation trigger module 301 is configured to trigger a data migration operation in a privacy space having data migration rights. The data reception module 302 is configured to receive data selected to be migrated. The data migration module 303 is configured to perform, by using a preset interface provided in the privacy space, the migration operation on the data to be migrated.

In a first potential implementation in the present disclosure, the data migration module 303 may be configured to: migrate the data to be migrated from a normal space to the privacy space via the preset interface, when the data to be migrated is data in the normal space; migrate the data to be migrated from the privacy space to the normal space via the preset interface, when the data to be migrated is data in the privacy space.

The preset interface is a preinstalled system level interface for providing a data channel between the privacy space and the normal space. The data migration module 303 is configured to: determine whether a current space is the privacy space, when the preset interface is invoked for migration operation on the data of the privacy space; invoke the preset interface for migration operation on the data of the privacy space, if the current space is the privacy space; deny invoking of the preset interface for migration operation on the data of the privacy space, if the current space is the normal space.

The operation trigger module 301 is configured to: log in the privacy space, when it is necessary to carry out data migrate-in or migrate-out operation on the privacy space; and trigger a data migration function in the privacy space to display a data migration interface, the data migration interface at least includes a data migrate-out option and a data migrate-in option.

The data reception module 302 is configured to: display a first data selection interface, when a trigger operation on the data migrate-out option is detected, the first data selection interface comprises a data list of the privacy space; receive the selected first data as the data to be migrated, according to a selection operation by a user in the data list of the privacy space; and accordingly, the data migration module 303 may be configured to migrate the data to be migrated from the privacy space to the normal space via the preset interface.

The data reception module 302 is configured to: display a second data selection interface, when a trigger operation on the data migrate-in option is detected, the second data selection interface comprises a data list of the normal space; receive the selected second data as the data to be migrated, according to a selection operation by the user in the data list of the normal space; and accordingly, the data migration module 303 is configured to migrate the data to be migrated from the normal space to the privacy space via the preset interface.

In a sixth potential implementation in the present disclosure, any other space except the privacy space does not have the data migration rights.

In a seventh potential implementation in the present disclosure, the device may further includes: a display module configured to display an unlock interface of the privacy space, when an access request for the privacy space is received; a password reception module configured to receive a password inputted by a user on the unlock interface of the privacy space; the display module is also configured to display the privacy space, in the case that the password is consistent with an unlock password of the privacy space.

In a eighth potential implementation in the present disclosure, the data migrate-out option may include migrate-out sub-options for multiple types of data, the data migrate-in option may include migrate-in sub-options for multiple types of data, and different types of data correspond to different storage paths in the privacy space.

The implementation procedures of functions and features of respective modules of the device are same as those in respective steps of the above methods, and thus will be not repeated here.

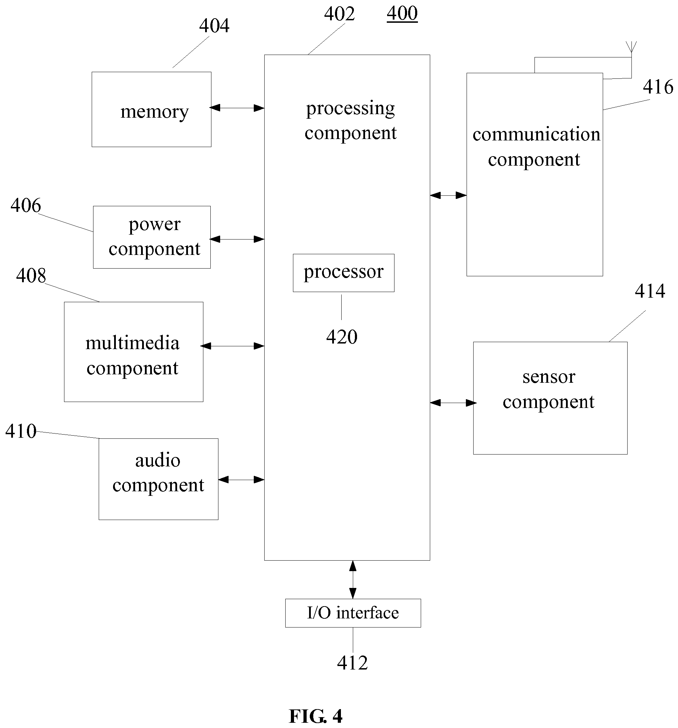

Fig. 4 is a block diagram illustrating a device 400 for data migration according to an exemplary embodiment. For example, the device 400 may be a mobile phone, a computer, a digital broadcast terminal, a message transceiver, a game console, a tablet device, a medical equipment, a fitness equipment, a personal digital assistant, and the like.

Referring to Fig. 4, the device 400 may include one or more of the following components: a processing component 402, a memory 404, a power component 406, a multimedia component 408, an audio component 410, an input/output (I/O) interface 412, a sensor component 414, and a communication component 416.

The processing component 402 typically controls overall operations of the device 400, such as the operations associated with display, telephone calls, data communications, camera operations, and recording operations. The processing component 402 may include one or more processors 420 to execute instructions to perform all or part of the steps in the above described methods. Moreover, the processing component 402 may include one or more modules which facilitate the interaction between the processing component 402 and other components. For instance, the processing component 402 may include a multimedia module to facilitate the interaction between the multimedia component 408 and the processing component 402.

The memory 404 is configured to store various types of data to support the operation of the device 400. Examples of such data may include instructions for any applications or methods operated on the device 400, contact data, phonebook data, messages, pictures, video, etc. The memory 404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 406 provides power to various components of the device 400. The power component 406 may include a power management system, one or more power sources, and any other components associated with the generation, management, and distribution of power in the device 400.

The multimedia component 408 includes a screen providing an output interface between the device 400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also detect a period of time and a pressure associated with the touch or swipe action. In some embodiments, the multimedia component 408 includes a front camera and/or a rear camera. The front camera and/or the rear camera may receive an external multimedia datum while the device 400 is in an operation mode, such as a photographing mode or a video mode. Each of the front camera and the rear camera may be a fixed optical lens system or have focus and optical zoom capability.

The audio component 410 is configured to output and/or input audio signals. For example, the audio component 410 includes a microphone ("MIC") configured to receive an external audio signal when the device 400 is in an operation mode, such as a call mode, a recording mode, and a voice recognition mode. The received audio signal may be further stored in the memory 404 or transmitted via the communication component 416. In some embodiments, the audio component 410 further includes a speaker to output audio signals.

The I/O interface 412 provides an interface between the processing component 402 and peripheral interface modules, such as a keyboard, a click wheel, buttons, and the like. The buttons may include, but are not limited to, a home button, a volume button, a starting button, and a locking button.

The sensor component 414 includes one or more sensors to provide status assessments of various aspects of the device 400. For instance, the sensor component 414 may detect an open/closed status of the device 400, relative positioning of components, e.g., the display and the keypad, of the device 400, a change in position of the device 400 or a component of the device 400, a presence or absence of user contact with the device 400, an orientation or an acceleration/deceleration of the device 400, and a change in temperature of the device 400. The sensor component 414 may include a proximity sensor configured to detect the presence of nearby objects without any physical contact. The sensor component 414 may also include a light sensor, such as a CMOS or CCD image sensor, for use in imaging applications. In some embodiments, the sensor component 414 may also include an accelerometer sensor, a gyroscope sensor, a magnetic sensor, a distance sensor, a pressure sensor, or a temperature sensor.

The communication component 416 is configured to facilitate communication, wired or wirelessly, between the device 400 and other devices. The device 400 can access a wireless network based on a communication standard, such as WiFi, 2G, or 3G, or a combination thereof. In one exemplary embodiment, the communication component 416 receives a broadcast signal or broadcast associated information from an external broadcast management system via a broadcast channel. In one exemplary embodiment, the communication component 416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as the memory 404 including instructions executable by the processor 420 in the device 400 to perform the above-described methods. For example, the non-transitory computer-readable storage medium may be a ROM, a RAM, a CD-ROM, a magnetic tape, a floppy disc, an optical data storage device, and the like.

In exemplary embodiments, there is also provided a non-transitory computer-readable storage medium including instructions that, when executed by a processor of a mobile terminal, enables the mobile terminal to perform the above-described method for data migration.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. The specification and embodiments are merely considered to be exemplary and the substantive scope of the disclosure is limited only by the appended claims.

It should be understood that the disclosure is not limited to the precise structure as described above and shown in the figures, but can have various modification and alternations without departing from the scope of the disclosure. The scope of the disclosure is limited only by the appended claims.

## Claims

1. A method for data migration in a terminal, **characterized by** comprising:
triggering (101) a data migration operation in a privacy space having data migration rights of the terminal, wherein the triggering the data migration operation in the privacy space comprises:
logging in the privacy space, when it is necessary to carry out data migrate-in or migrate-out operation on the privacy space, and
triggering a data migration function in the privacy space to display a data migration interface, wherein the data migration interface comprises at least a data migrate-out option and a data migrate-in option;
receiving (102) data selected to be migrated from one of the privacy space and a normal space of the terminal, both spaces being arranged in the same terminal, wherein the receiving the data selected to be migrated comprises:
displaying a first data selection interface when a trigger operation on the data migrate-out option is detected, wherein the first data selection interface comprises a data list of the privacy space, and receiving a selected first data as the data to be migrated, according to a selection operation by a user in the data list of the privacy space; and
displaying a second data selection interface when a trigger operation on the data migrate-in option is detected, wherein the second data selection interface comprises a data list of the normal space, and receiving a selected second data as the data to be migrated, according to a selection operation by a user in the data list of the normal space; and
performing (103), by using a preset interface provided in the privacy space, a migration operation on the data to be migrated between the privacy space and the normal space, wherein the preset interface is a preinstalled system level interface for providing a data channel between the privacy space and the normal space,
wherein the performing, by using the preset interface provided in the privacy space, the migration operation on the data to be migrated comprises:
determining whether a current space is the privacy space, when the preset interface is invoked for migration operation on the data of the privacy space;
invoking the preset interface for migration operation on the data of the privacy space, if the current space is the privacy space; and
denying invoking of the preset interface for migration operation on the data of the privacy space, if the current space is the normal space.

2. The method of claim 1, wherein the performing, by using a preset interface, the migration operation on the data to be migrated comprises:
migrating the data to be migrated from the normal space to the privacy space via the preset interface, when the data to be migrated is data in the normal space; and
migrating the data to be migrated from the privacy space to the normal space via the preset interface, when the data to be migrated is data in the privacy space.

3. The method of claim 1, wherein any other space except the privacy space does not have the data migration rights.

4. The method of claim 1, wherein the logging in is performed with a password, the method further comprises:
displaying (201) an unlock interface of the privacy space, when an access request for the privacy space is received;
receiving a password inputted by a user on the unlock interface of the privacy space; and
displaying an interface of the privacy space in the case that the password is consistent with an unlock password for the privacy space.

5. The method of claim 1, wherein the data migrate-out option includes migrate-out sub-options for multiple types of data, and the data migrate-in option includes migrate-in sub-options for multiple types of data, and different types of data correspond to different storage paths in the privacy space.

6. A terminal for data migration, comprising:
an operation trigger module (301) configured to trigger a data migration operation in a privacy space having data migration rights of the terminal, wherein the operation trigger module (301) is configured to:
log in the privacy space, when it is necessary to carry out data migrate-in or migrate-out operation on the privacy space; and
trigger a data migration function in the privacy space to display a data migration interface, wherein the data migration interface at least includes a data migrate-out option and a data migrate-in option;
a data reception module (302) configured to receive data selected to be migrated from one of the privacy space and a normal space of the terminal, both spaces being arranged in the same terminal, wherein the data reception module (302) is configured to:
display a first data selection interface when a trigger operation on the data migrate-out option is detected, wherein the first data selection interface comprises a data list of the privacy space, and receive a selected first data as the data to be migrated, according to a selection operation by a user in the data list of the privacy space; and
display a second data selection interface when a trigger operation on the data migrate-in option is detected, wherein the second data selection interface comprises a data list of the normal space, and receive a selected second data as the data to be migrated, according to a selection operation by a user in the data list of the normal space
a data migration module (303) configured to perform, by using a preset interface provided in the privacy space, a migration operation on the data to be migrated between the privacy space and the normal space, wherein the preset interface is a preinstalled system level interface for providing a data channel between the privacy space and the normal space,
wherein data migration module (303) is configured to:
determine whether a current space is the privacy space, when the preset interface is invoked for migration operation on the data of the privacy space;
invoke the preset interface for migration operation on the data of the privacy space, if the current space is the privacy space; and
deny invoking of the preset interface for migration operation on the data of the privacy space, if the current space is the normal space.

7. The device of claim 6, wherein the data migration module (303) is configured to:
migrate the data to be migrated from the normal space to the privacy space via the preset interface, when the data to be migrated is data in the normal space; and
migrate the data to be migrated from the privacy space to the normal space via the preset interface, when the data to be migrated is data in the privacy space.

8. The device of claim 6, wherein any other space except the privacy space does not have the data migration rights.

9. The device of claim 6, wherein the data migrate-out option includes migrate-out sub-options for multiple types of data, the data migrate-in option includes migrate-in sub-options for multiple types of data, and different types of data correspond to different storage paths in the privacy space.

## Patentansprüche

1. Verfahren zur Datenmigration in einem Endgerät, **dadurch gekennzeichnet, dass** das Verfahren umfasst:
Auslösen (101) eines Datenmigrationsvorgangs in einem Datenschutzbereich mit Datenmigrationsrechten des Endgeräts, wobei das Auslösen des Datenmigrationsvorgangs in dem Datenschutzbereich umfasst:
Einloggen in den Datenschutzbereich, wenn es notwendig ist, einen Datenmigrationsvorgang in oder aus dem Datenschutzbereich durchzuführen, und
Auslösen einer Datenmigrationsfunktion in dem Datenschutzbereich, um eine Datenmigrationsschnittstelle anzuzeigen, wobei die Datenmigrationsschnittstelle mindestens eine Option zur Datenmigration nach außen und eine Option zur Datenmigration nach innen umfasst;
Empfangen (102) von Daten, die zur Migration aus einem Datenschutzbereich oder einem Normalbereich des Endgeräts ausgewählt wurden, wobei beide Bereiche in demselben Endgerät angeordnet sind, wobei das Empfangen der zur Migration ausgewählten Daten umfasst:
Anzeigen einer ersten Datenauswahlschnittstelle, wenn ein Auslösevorgang in der Option zur Datenmigration nach außen detektiert wird, wobei die erste Datenauswahlschnittstelle eine Datenliste des Datenschutzbereichs aufweist, und Empfangen ausgewählter erster Daten als Daten zur Migration, entsprechend einem Auswahlvorgang von einem Benutzer in der Datenliste des Datenschutzbereichs; und
Anzeigen einer zweiten Datenauswahlschnittstelle, wenn ein Auslösevorgang in der Option zur Datenmigration nach innen detektiert wird, wobei die zweite Datenauswahlschnittstelle eine Datenliste des Normalbereichs aufweist, und Empfangen ausgewählter zweiten Daten als Daten zur Migration, entsprechend einem Auswahlvorgang durch einen Benutzer in der Datenliste des Normalbereichs; und
Durchführen (103), unter Verwendung einer im Datenschutzbereich vorgegebenen Schnittstelle, eines Migrationsvorgangs auf den Daten zur Migration zwischen dem Datenschutzbereich und dem Normalbereich, wobei die vorgegebene Schnittstelle eine vorinstallierte Schnittstelle auf Systemebene ist, um einen Datenkanal zwischen dem Datenschutzbereich und dem Normalbereich bereitzustellen,
wobei das Durchführen, unter Verwendung der im Datenschutzbereich vorgegebenen Schnittstelle, des Migrationsvorgangs auf den Daten zur Migration umfasst:
Bestimmen, ob ein aktueller Bereich der Datenschutzbereich ist, wenn die vorgegebene Schnittstelle für einen Migrationsvorgang auf den Daten des Datenschutzbereichs aufgerufen wird;
Aufrufen der vorgegebenen Schnittstelle für den Migrationsvorgang auf den Daten des Datenschutzbereichs, wenn der aktuelle Bereich der Datenschutzbereich ist; und Verweigern des Aufrufens der vorgegebenen Schnittstelle für den Migrationsvorgang auf den Daten des Datenschutzbereichs, wenn der aktuelle Bereich der Normalbereich ist.

2. Verfahren nach Anspruch 1, wobei das Durchführen, unter Verwendung einer vorgegebenen Schnittstelle, des Migrationsvorgangs auf den Daten zur Migration umfasst:
Migrieren der Daten zur Migration aus dem Normalbereich in den Datenschutzbereich über die vorgegebene Schnittstelle, wenn die Daten zur Migration die Daten im Normalbereich sind; und
Migrieren der Daten zur Migration aus dem Datenschutzbereich in den Normalbereich über die vorgegebene Schnittstelle, wenn die Daten zur Migration die Daten im Datenschutzbereich sind.

3. Verfahren nach Anspruch 1, wobei jeder andere Bereich außer dem Datenschutzbereich keine Datenmigrationsrechte hat.

4. Verfahren nach Anspruch 1, wobei das Einloggen mit einem Passwort durchgeführt wird, wobei das Verfahren ferner umfasst:
Anzeigen (201) einer Entsperrungsschnittstelle des Datenschutzbereichs, wenn eine Zugriffsanfrage für den Datenschutzbereich empfangen wird;
Empfangen eines von einem Benutzer auf der Entsperrungsschnittstelle des Datenschutzbereichs eigegebenen Passworts; und
Anzeigen einer Schnittstelle des Datenschutzbereichs in dem Fall, dass das Passwort mit einem Entsperrungspasswort des Datenschutzbereichs übereinstimmt.

5. Verfahren nach Anspruch 1, wobei die Option zur Datenmigration nach außen Suboptionen zur Migration nach außen für mehrere Arten von Daten umfasst, und die Option zur Datenmigration nach innen Suboptionen zur Migration nach innen für mehrere Arten von Daten umfasst, und verschiedene Arten von Daten verschiedenen Speicherpfaden im Datenschutzbereich entsprechen.

6. Endgerät zur Datenmigration, das aufweist:
ein Vorgangsauslösemodul (301), das dazu ausgebildet ist, einen Datenmigrationsvorgang in einem Datenschutzraum mit Datenmigrationsrechten des Endgeräts auszulösen,
wobei das Vorgangsauslösemodul (301) für Folgendes ausgebildet ist:
Einloggen in den Datenschutzbereich, wenn es notwendig ist, einen Datenmigrationsvorgang in oder aus dem Datenschutzbereich durchzuführen; und
Auslösen einer Datenmigrationsfunktion in dem Datenschutzbereich, um eine Datenmigrationsschnittstelle anzuzeigen, wobei die Datenmigrationsschnittstelle mindestens eine Option zur Datenmigration nach außen und eine Option zur Datenmigration nach innen umfasst;
ein Datenempfangsmodul (302), das dazu ausgebildet ist, Daten zu empfangen, die zur Migration aus einem Datenschutzbereich oder einem Normalbereich des Endgeräts ausgewählt wurden, wobei beide Bereiche in demselben Endgerät angeordnet sind, wobei das Datenempfangsmodul (302) für Folgendes ausgebildet ist:
Anzeigen einer ersten Datenauswahlschnittstelle, wenn ein Auslösevorgang in der Option zur Datenmigration nach außen detektiert wird, wobei die erste Datenauswahlschnittstelle eine Datenliste des Datenschutzbereichs aufweist, und Empfangen ausgewählter erster Daten als Daten zur Migration, entsprechend einem Auswahlvorgang von einem Benutzer in der Datenliste des Datenschutzbereichs; und
Anzeigen einer zweiten Datenauswahlschnittstelle, wenn ein Auslösevorgang in der Option zur Datenmigration nach innen detektiert wird, wobei die zweite Datenauswahlschnittstelle eine Datenliste des Normalbereichs aufweist, und Empfangen ausgewählter zweiten Daten als Daten zur Migration, entsprechend einem Auswahlvorgang durch einen Benutzer in der Datenliste des Normalbereichs;
ein Datenmigrationsmodul (303), das dazu ausgebildet ist, unter Verwendung einer im Datenschutzbereich vorgegebenen Schnittstelle, einen Migrationsvorgang auf den Daten zur Migration zwischen dem Datenschutzbereich und dem Normalbereich durchzuführen, wobei die vorgegebene Schnittstelle eine vorinstallierte Schnittstelle auf Systemebene ist, um einen Datenkanal zwischen dem Datenschutzbereich und dem Normalbereich bereitzustellen,
wobei das Datenmigrationsmodul (303) für Folgendes ausgebildet ist:
Bestimmen, ob ein aktueller Bereich der Datenschutzbereich ist, wenn die vorgegebene Schnittstelle für einen Migrationsvorgang auf den Daten des Datenschutzbereichs aufgerufen wird;
Aufrufen der vorgegebenen Schnittstelle für den Migrationsvorgang auf den Daten des Datenschutzbereichs, wenn der aktuelle Bereich der Datenschutzbereich ist; und
Verweigern des Aufrufens der vorgegebenen Schnittstelle für den Migrationsvorgang auf den Daten des Datenschutzbereichs, wenn der aktuelle Bereich der Normalbereich ist.

7. Vorrichtung nach Anspruch 6, wobei das Datenmigrationsmodul (303) für Folgendes ausgebildet ist:
Migrieren der Daten zur Migration aus dem Normalbereich in den Datenschutzbereich über die vorgegebene Schnittstelle, wenn die Daten zur Migration die Daten im Normalbereich sind; und
Migrieren der Daten zur Migration aus dem Datenschutzbereich in den Normalbereich über die vorgegebene Schnittstelle, wenn die Daten zur Migration die Daten im Datenschutzbereich sind.

8. Vorrichtung nach Anspruch 6, wobei jeder andere Bereich außer dem Datenschutzbereich keine Datenmigrationsrechte hat.

9. Vorrichtung nach Anspruch 6, wobei die Option zur Datenmigration nach außen Suboptionen zur Migration nach außen für mehrere Arten von Daten umfasst, und die Option zur Datenmigration nach innen Suboptionen zur Migration nach innen für mehrere Arten von Daten umfasst, und verschiedene Arten von Daten verschiedenen Speicherpfaden im Datenschutzbereich entsprechen.

## Revendications

1. Procédé de migration de données dans un terminal, **caractérisé en qu'il** comprend :
le déclenchement (101) d'une opération de migration de données dans un espace de confidentialité disposant de droits de migration de données du terminal, dans lequel le déclenchement de l'opération de migration de données dans l'espace de confidentialité comprend :
l'ouverture d'une session dans l'espace de confidentialité, lorsqu'il est nécessaire d'effectuer une opération de migration de données vers l'intérieur ou vers l'extérieur sur l'espace de confidentialité, et
le déclenchement d'une fonction de migration de données dans l'espace de confidentialité pour afficher une interface de migration de données, dans lequel l'interface de migration de données comprend au moins une option de migration de données vers l'extérieur et une option de migration de données vers l'intérieur ;
la réception (102) de données sélectionnées pour être migrées à partir d'un espace parmi l'espace de confidentialité et un espace normal du terminal, les deux espaces étant agencés dans le même terminal, dans lequel la réception des données sélectionnées pour être migrées comprend :
l'affichage d'une interface de sélection de première donnée lorsqu'une opération de déclenchement sur l'option de migration de données vers l'extérieur est détectée, dans lequel l'interface de sélection de première donnée comprend une liste de données de l'espace de confidentialité, et la réception d'une première donnée sélectionnée en tant que donnée à migrer, selon une opération de sélection par un utilisateur dans la liste de données de l'espace de confidentialité ; et
l'affichage d'une interface de sélection de seconde donnée lorsqu'une opération de déclenchement sur l'option de migration de données vers l'intérieur est détectée, dans lequel l'interface de sélection de seconde donnée comprend une liste de données de l'espace normal, et la réception d'une seconde donnée sélectionnée en tant que donnée à migrer, selon une opération de sélection par un utilisateur dans la liste de données de l'espace normal ; et
la réalisation (103), à l'aide d'une interface prédéfinie fournie dans l'espace de confidentialité, d'une opération de migration sur les données à migrer entre l'espace de confidentialité et l'espace normal, dans lequel l'interface prédéfinie est une interface de niveau système préinstallée permettant de fournir un canal de données entre l'espace de confidentialité et l'espace normal,
dans lequel la réalisation, à l'aide de l'interface prédéfinie fournie dans l'espace de confidentialité, de l'opération de migration sur les données à migrer comprend :
le fait de déterminer si un espace actuel est l'espace de confidentialité, lorsque l'interface prédéfinie est appelée pour une opération de migration sur les données de l'espace de confidentialité ;
l'appel de l'interface prédéfinie pour une opération de migration sur les données de l'espace de confidentialité, si l'espace actuel est l'espace de confidentialité ; et
le refus d'appeler l'interface prédéfinie pour une opération de migration sur les données de l'espace de confidentialité, si l'espace actuel est l'espace normal.

2. Procédé selon la revendication 1, dans lequel la réalisation, à l'aide d'une interface prédéfinie, de l'opération de migration sur les données à migrer comprend :
la migration des données à migrer de l'espace normal à l'espace de confidentialité par le biais de l'interface prédéfinie, lorsque les données à migrer sont des données dans l'espace normal ; et
la migration des données à migrer de l'espace de confidentialité à l'espace normal par le biais de l'interface prédéfinie, lorsque les données à migrer sont des données dans l'espace de confidentialité.

3. Procédé selon la revendication 1, dans lequel tout autre espace à l'exception de l'espace de confidentialité ne dispose pas des droits de migration de données.

4. Procédé selon la revendication 1, dans lequel l'ouverture de session est effectuée avec un mot de passe, le procédé comprend en outre :
l'affichage (201) d'une interface de déverrouillage de l'espace de confidentialité, lorsqu'une demande d'accès à l'espace de confidentialité est reçue ;
la réception d'un mot de passe entré par un utilisateur sur l'interface de déverrouillage de l'espace de confidentialité ; et l'affichage d'une interface de l'espace de confidentialité dans le cas où le mot de passe est cohérent avec un mot de passe de déverrouillage pour l'espace de confidentialité.

5. Procédé selon la revendication 1, dans lequel l'option de migration de données vers l'extérieur comporte des sous-options de migration vers l'extérieur pour de multiples types de données, et l'option de migration de données vers l'intérieur comporte des sous-options de migration vers l'intérieur pour de multiples types de données, et différents types de données correspondent à différents chemins de stockage dans l'espace de confidentialité.

6. Terminal de migration de données, comprenant :
un module de déclenchement d'opération (301) configuré pour déclencher une opération de migration de données dans un espace de confidentialité disposant de droits de migration de données du terminal, dans lequel le module de déclenchement d'opérations (301) est configuré pour :
ouvrir une session dans l'espace de confidentialité, lorsqu'il est nécessaire d'effectuer une opération de migration de données vers l'intérieur ou vers l'extérieur sur l'espace de confidentialité ; et
déclencher une fonction de migration de données dans l'espace de confidentialité pour afficher une interface de migration de données, dans lequel l'interface de migration de données comporte au moins une option de migration de données vers l'extérieur et une option de migration de données vers l'intérieur ;
un module de réception de données (302) configuré pour recevoir des données sélectionnées pour être migrées à partir d'un espace parmi l'espace de confidentialité et un espace normal du terminal, les deux espaces étant agencés dans le même terminal, dans lequel le module de réception de données (302) est configuré pour :
afficher une interface de sélection de première donnée lorsqu'une opération de déclenchement sur l'option de migration de données vers l'extérieur est détectée, dans lequel l'interface de sélection de première donnée comprend une liste de données de l'espace de confidentialité, et recevoir une première donnée sélectionnée en tant que donnée à migrer, selon une opération de sélection par un utilisateur dans la liste de données de l'espace de confidentialité ; et
afficher une interface de sélection de seconde donnée lorsqu'une opération de déclenchement sur l'option de migration de données vers l'intérieur est détectée, dans lequel l'interface de sélection de seconde donnée comprend une liste de données de l'espace normal, et recevoir une seconde donnée sélectionnée en tant que donnée à migrer, selon une opération de sélection par un utilisateur dans la liste de données de l'espace normal
un module de migration de données (303) configuré pour effectuer, à l'aide d'une interface prédéfinie fournie dans l'espace de confidentialité, une opération de migration sur les données à migrer entre l'espace de confidentialité et l'espace normal, dans lequel l'interface prédéfinie est une interface de niveau système préinstallée permettant de fournir un canal de données entre l'espace de confidentialité et l'espace normal,
dans lequel le module de migration de données (303) est configuré pour :
déterminer si un espace actuel est l'espace de confidentialité, lorsque l'interface prédéfinie est appelée pour une opération de migration sur les données de l'espace de confidentialité ;
appeler l'interface prédéfinie pour une opération de migration sur les données de l'espace de confidentialité, si l'espace actuel est l'espace de confidentialité ; et
refuser d'appeler l'interface prédéfinie pour une opération de migration sur les données de l'espace de confidentialité, si l'espace actuel est l'espace normal.

7. Dispositif selon la revendication 6, dans lequel le module de migration de données (303) est configuré pour :
migrer les données à migrer de l'espace normal à l'espace de confidentialité par le biais de l'interface prédéfinie, lorsque les données à migrer sont des données dans l'espace normal ; et
migrer les données à migrer de l'espace de confidentialité à l'espace normal par le biais de l'interface prédéfinie, lorsque les données à migrer sont des données dans l'espace de confidentialité.

8. Dispositif selon la revendication 6, dans lequel tout autre espace à l'exception de l'espace de confidentialité ne dispose pas des droits de migration de données.

9. Dispositif selon la revendication 6, dans lequel l'option de migration de données vers l'extérieur comporte des sous-options de migration vers l'extérieur pour de multiples types de données, l'option de migration de données vers l'intérieur comporte des sous-options de migration vers l'intérieur pour de multiples types de données, et différents types de données correspondent à différents chemins de stockage dans l'espace de confidentialité.
